Europäisches Patentamt

(19) European Patent Office

Office européen des brevets

(11) Numéro de publication : **0 108 016 B1**

(12) **FASCICULE DE BREVET EUROPÉEN**

(45) Date de publication du fascicule du brevet :
21.01.87

(51) Int. Cl.⁴ : **B 29 C 63/00**

(21) Numéro de dépôt : **83402083.6**

(22) Date de dépôt : **26.10.83**

(54) **Procédé et installation de revêtement de câbles textiles.**

(30) Priorité : **29.10.82 FR 8218152**

(43) Date de publication de la demande :
**09.05.84 Bulletin 84/19**

(45) Mention de la délivrance du brevet :
**21.01.87 Bulletin 87/04**

(84) Etats contractants désignés :
**AT BE CH DE GB IT LI LU NL SE**

(56) Documents cités :
**DE-A- 2 707 516**
**US-A- 2 694 661**
**US-A- 3 470 051**
**US-A- 4 100 013**

(73) Titulaire : **COUSIN FRERES S.A.**
**8 Rue Abbe Bonpain**
**F-59117 Wervicq-Sud (FR)**

(72) Inventeur : **Cousin, Jean-Claude**
**La Sapinière**
**F-59117 Wervicq Sud (FR)**

(74) Mandataire : **Viard, Jean**
**Cabinet VIARD 28 bis, avenue Mozart**
**F-75016 Paris (FR)**

## Description

La présente invention a pour objet un procédé et une installation de revêtement de câbles textiles, selon les préambules des revendications 1 et respectivement 4 ainsi que les câbles obtenus selon ledit procédé.

De tous temps, on a cherché à augmenter la durée de vie des câbles et cordages réalisés en fibres textiles naturelles ou synthétiques et utilisés dans différents domaines. Cette augmentation résulte d'une amélioration de la résistance mécanique et de la résistance aux agents chimiques. La résistance mécanique a pour but de contrecarrer les effets pernicieux de l'abrasion, des chocs, des meurtrissures, de l'écrasement, de l'enroulement, des déchirures et des pliages selon des angles aigus. La résistance aux agents chimiques est nécessaire pour lutter contre les facteurs climatiques (intempéries, rayons solaires, etc..), contre la pollution de l'air et contre les bactéries, l'humidité, les coquillages, etc...

Le produit étant de forme générale cylindrique, il est souhaitable de pouvoir le revêtir d'une couche protectrice uniforme et concentrique à l'enveloppe du câble ou à l'âme de ce câble. Le choix des moyens pour réaliser un tel revêtement a évolué avec les progrès de la technique, notamment dans le domaine chimique. Deux axes principaux ont été suivis :

l'imprégnation en plein bain

le boudinage qui consiste à réaliser une extrusion sur le câble, à l'aide d'une tête d'équerre.

D'autres moyens, tels que la projection électrostatique, par exemple, n'ont pas permis un développement industriel notable.

L'imprégnation en plein bain par passage du câble dans une solution, chauffée ou non, de résines, vernis, bitumes, etc... ne permet pas d'obtenir une protection d'épaisseur convenable, à moins de recommencer l'opération d'enduction un grand nombre de fois. Elle conduit à des dépenses d'énergie considérables, notamment pour le séchage et nécessite des investissements importants. Les résultats sont donc insuffisants par rapport aux dépenses engagées et ce procédé est peu utilisé, à ce jour du moins, dans le but recherché par la présente invention.

Le procédé le plus utilisé pour revêtir les câbles et connu du déposant est actuellement le boudinage. Aucun document précis reflétant cette technique n'est connu. Ce procédé consiste à forcer dans une filière le produit obtenu par fusion de granulés (ou de poudre), sur le câble proprement dit qui se trouve, grâce à une tête d'équerre introduit en continu dans le profilé creux extrudé. Ce procédé présente toutefois des inconvénients, notamment en ce qui concerne le revêtement des câbles textiles dont la surface externe est moins régulière que celle des câbles métalliques. Or, lors du boudinage, le câble doit être régulier et parfaitement centré pour que le résultat obtenu soit satisfaisant. Il n'en est pratiquement rien. D'autre part, outre un investissement important, le boudinage est bien adapté à la réalisation de grandes longueurs de câbles à très grande vitesse. Par contre, il nécessite des mises au point longues et par suite coûteuses, conduisant notamment à des pertes de matière considérables. Ces pertes, provoquées par les essais et réglages, sont prohibitives, notamment dans le cas de câbles réalisés à partir de fibres aramides. Ce procédé n'est par suite pas applicable lorsqu'il s'agit de fabriquer des longueurs relativement limitées de câbles de diamètres variables.

Dans un autre domaine technique, le brevet US-A-3 470 051, décrit un procédé et une installation pour renforcer des tubes creux ou pleins en disposant à la périphérie de ceux-ci des fibres de verre régulièrement réparties. A cet effet, les fibres, préalablement enduites de résines, sont acheminées dans une filière à périphérie canelée, chacune des fibres passant dans une canelure.

Le problème qui est résolu dans ce brevet est celui d'une répartition homogène des fibres. Tel n'est pas le cas dans la présente demande où les rubans de matière thermoplastique doivent perdre leur individualité au cours d'une fusion. De plus, il ne s'agit pas dans la demande d'un renforcement du noyau mais d'une protection de celui-ci, le câble devant conserver sa souplesse.

La présente invention a pour objet de pallier les inconvénients mentionnés ci-dessus et de permettre l'obtention d'un revêtement d'épaisseur uniforme, par un procédé de mise en œuvre particulièrement simple, à un coût minimum.

Selon la présente invention, le procédé de revêtement d'un câble est caractérisé en ce qu'il consiste :

à dérouler l'âme du câble avec une prétension à travers une zone de préchauffage à déposer en continu autour de l'âme, au moyen d'une grille de répartition, un ensemble de fils ou bandes de matière plastique extrudée ;

à faire passer l'ensemble composé de l'âme et des bandes dans une filière chauffée dont la section est inférieure à la somme des sections de l'âme et de l'ensemble des bandes :

à tirer l'ensemble composé de l'âme et du revêtement à travers une zone de refroidissement au moyen d'un dispositif de traction agissant sur le câble recouvert et refroidi ;

à enrouler le câble obtenu sur un cabestan.

La présente invention se présente donc sous la forme d'une synthèse entre les procédés connus d'extrusion et de pultrusion. Elle concerne également une installation pour la mise en œuvre du procédé telle que définie dans la revendication 4.

Comme dans l'extrusion, la matière, à l'état pâteux, est forcée à travers une filière, la compression provenant d'une part de la traction sur le câble et, d'autre part du fait que la matière de revêtement est excédentaire par rapport à la section de la filière. La traction exercée sur le produit câble + revêtement est analogue à celle exercée en pultrusion. Cette traction exerce une tension sur le câble.

Selon une autre caractéristique de l'invention, le câble est soumis à une traction de l'ordre de grandeur de sa tension moyenne de service, lors du revêtement. Le rôle de cette traction, outre son effet d'entraînement du câble, est double. Elle permet d'obtenir un centrage impeccable du câble dans la filière mais également de réduire la section de celui-ci à sa section en service. Ainsi, il n'y a pas à craindre de rétraction, après refroidissement, du câble à l'intérieur de sa gaine de revêtement, ce qui nuirait à l'homogénéité du produit. Le chauffage préalable du câble a pour but de provoquer un dégazage de celui-ci. On sait, en effet, que selon la nature des fibres constitutives, l'absorption et l'adsorption d'air et d'humidité sont plus ou moins importantes. Si aucune précaution n'était prise à cet égard, il se formerait des cloques gazeuses altérant les caractéristiques physiques et esthétiques des câbles terminés. Par ailleurs, ce préchauffage est éminemment favorable à l'obtention d'un dépôt convenable du revêtement sur le câble, bien que le résultat final s'apparente à un moulage de la gaine autour du câble, plus qu'à la formation de deux constituants collés. C'est ainsi qu'il a été possible de déposer un revêtement sur un câble préalablement lubrifié avec des huiles silicones.

D'autres caractéristiques et avantages de l'invention apparaîtront au cours de la description qui va suivre de modes de réalisation particuliers, donnés uniquement à titre d'exemples non limitatifs, en regard des dessins qui représentent :

la Figure 1, une vue en élévation d'un dispositif permettant la mise en œuvre du procédé ;

la Figure 2, une vue par-dessus de la même installation ;

la Figure 3, une installation permettant d'obtenir des courroies ou câbles fermés non épissurés ;

les Figures 4 à 6, des sections de câbles obtenus selon le procédé de l'invention, l'épaisseur du revêtement étant exagérée pour faciliter la compréhension.

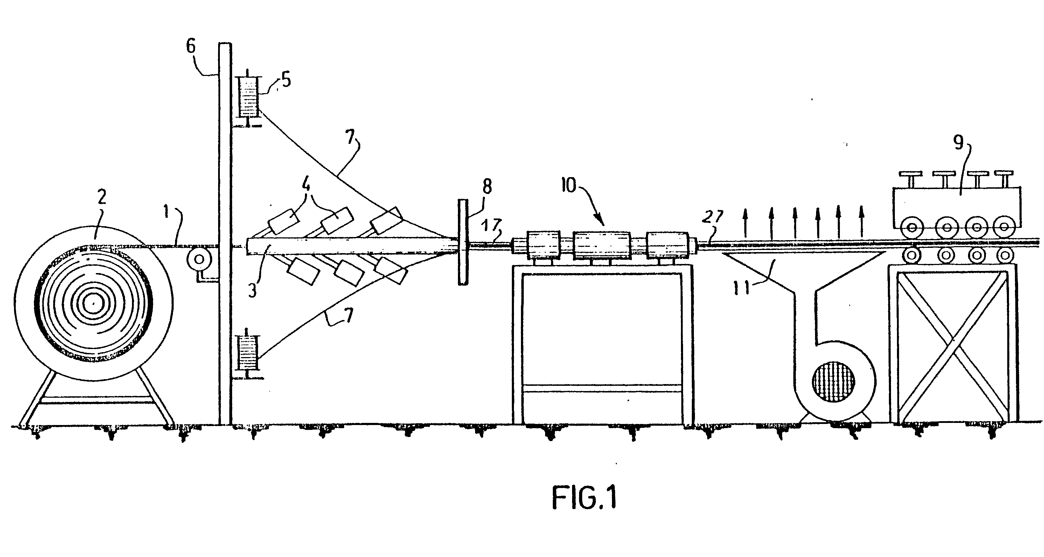

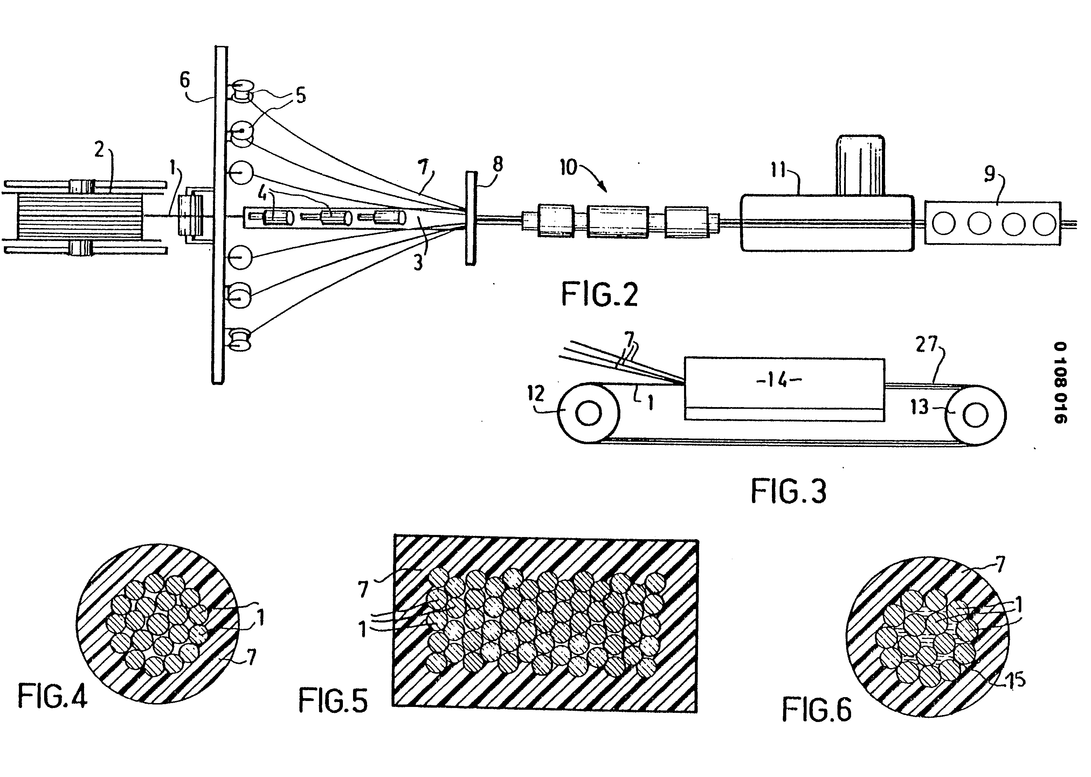

Sur les Figures 1 et 2, le câble ou cordage est déroulé à partir d'un cabestan 2. Il passe, dans un premier temps, par un tunnel de chauffage 3 qui, dans l'exemple représenté, comprend une multiplicité de pistolets à air chaud 4, mais qui peut inclure une ou plusieurs sources de rayons infrarouges. Le câble 1 traverse un ratelier 6 supportant un ensemble de bobines 5 sur lesquelles est enroulée, de préférence sous forme de bandes, la matière de revêtement 7. L'ensemble câble 1-matière 7 passe ensuite par une grille de répartition 8 dont le rôle est de disposer les fils ou bandes 7 autour du câble 1, de manière régulière, de sorte que le câble 1 soit complètement entouré par les bandes 7 à la sortie de la grille de répartition. Le déroulement du câble 1 et des bandes 7 est provoqué par la traction exercée par une chenille de tirage 9. A la sortie de la grille de répartition 8 est disposée une filière 10 présentant la forme d'un cylindre et, avantageusement, trois zones de chauffe 10a, 10b, et 10c. A la sortie de la filière est disposé un système de refroidissement 11 qui a pour but de ramener rapidement le câble revêtu de sa gaine 27 à la température ambiante. La matière de recouvrement 7, préalablement extrudée en ruban, jonc ou autre profilé, est ainsi déposée en continu sur le câble, chacun des rubans ou jonc étant en 17, à la sortie de la grille 8, en léger recouvrement avec les rubans ou joncs adjacents. Dans le cas où le câble est constitué de fibres ne devant subir qu'une faible torsion (allongement à la rupture relativement faible), il est possible de procéder, avant la mise en œuvre du procédé selon l'invention, à un léger enrubannage ou guipage qui assurera la cohésion des fibres avant revêtement.

L'un des avantages du procédé provient de ce que le mode de traction assure, automatiquement, un centrage parfait, sans précautions particulières, et par suite, l'épaisseur du revêtement est uniforme. On notera que la traction est exercée non pas sur le câble 1 mais sur l'ensemble 27, câble + revêtement.

De préférence, et afin d'économiser de l'énergie, l'air chaud, en sortie du ventilateur 11, est acheminé sur le tunnel de préchauffage 3.

Le câble, enduit comme il vient d'être décrit, 27 peut repasser à nouveau dans l'installation afin de recevoir une ou plusieurs couches supplémentaires. On a, par ailleurs la possibilité d'utiliser des rubans de matière de revêtement de couleurs différentes qui peuvent constituer un enjolivement et/ou une identification. Il est également possible de déposer sur le câble plusieurs matières différentes en autant d'opérations.

Pour obtenir à la fois un glissement parfait du câble revêtu de la matière de revêtement qui est amenée à l'état pâteux dans la filière, et aussi un fini lisse du câble final 27, la filière 10 subit, de préférence un traitement du genre polimiroir ou reçoit un revêtement de « téflon » ou analogue. Bien entendu, la traction appliquée sur le câble 27 par la chenille 9 est calculée en fonction des diamètres des câbles à recouvrir et des masses de ces câbles, ainsi que de l'épaisseur désirée du revêtement.

Bien que le procédé ait été spécialement développé pour les câbles textiles, il est bien entendu possible de recouvrir des câbles de fibres métalliques, minérales ou autres. De même, la section du « câble » 1 peut être quelconque et, par exemple, rectangulaire, la section du produit obtenu ne dépendant, en définitive, que de la section de la filière. Il est ainsi possible d'obtenir des tresses ou des sangles munies d'un revêtement.

De préférence, la matière de revêtement est une matière thermoplastique dont la température est progressivement élevée dans les trois sections 10a, 10b et 10c de la filière ce qui la porte à un état plastique se prêtant à la conformation de la gaine. On notera que, dans ce cas, la matière ne subit aucune transformation chimique, seules ses caractéristiques physiques étant modifiées au cours du procédé. Il en résulte qu'il n'y a aucun risque d'intoxication des ouvriers. Il est toutefois possible d'utiliser une matière thermodurcissable en phase A, non polymérisée.

Contrairement aux opérations de boudinage qui nécessitent un refroidissement du câble sur une distance d'au moins une centaine de mètres, l'installation qui vient d'être décrite permet d'obtenir des câbles revêtus d'un diamètre pouvant aller jusqu'à 120 mm avec une longueur totale d'installation de l'ordre de 20 à 25 mètres. Ce résultat est obtenu en modifiant le moins possible l'état de la matière de revêtement ce qui permet, par ailleurs, d'économiser une grande partie de l'énergie mise en œuvre dans les procédés traditionnels.

Comme représenté sur la Fig. 3, le procédé selon l'invention permet également de fabriquer des courroies ou des élingues non épissurées. La Fig. 3 est un schéma de principe d'une installation qui se distingue essentiellement de la précédente en ce que l'âme 1 est une tresse fermée tournant sur deux bobines ou cabestans 12 et 13, entraînés de manière classique et en ce que l'ensemble 14 incluant la grille de répartition et la filière peut s'ouvrir pour introduire l'âme 1 et pour retirer la courroie terminée 27. Les dispositifs de chauffage et de refroidissement n'ont pas été représentés. Bien entendu, dans ce mode de réalisation, le dépôt de plusieurs couches successives ne pose aucun problème à part celui de la section de la filière.

La Fig. 4 représente, en coupe, un câble 27 obtenu par le procédé selon l'invention. Il se compose d'un câble ou cordage proprement dit 1 entouré par une gaine 7. Comme il a été dit précédemment, une tension est appliquée sur le câble lors du passage de celui-ci, cette tension, provoquant une réduction de son diamètre extérieur, étant choisie pour correspondre à une tension moyenne d'utilisation. A la sortie de la filière 10 et lors du refroidissement subséquent, le câble a tendance à se dilater ce qui assure une bonne cohésion entre le câble et sa gaine, cohésion qu'il était précédemment très difficile d'obtenir entre deux corps hétérogènes. Comme on peut le voir sur la Fig. 4, le revêtement plastique 7 est en quelque sorte, moulé autour du câble 1, sans pénétrer entre les torons constitutifs.

La Fig. 5, représente en section transversale une courroie rectangulaire recouverte d'un revêtement 7, l'âme 1 étant constituée par des nappes de fils parallèles.

Sur la Fig. 6 est représentée la section d'un câble lubrifié qui se présente sensiblement sous la même forme que le câble de la Fig. 4 mais qui contient en outre un lubrifiant 15 qui, initialement contenu à l'intérieur de l'âme 1, migre ultérieurement à la périphérie de celui-ci entre l'âme et la gaine 7 ce qui assure notamment une bonne résistance aux pliages successifs.

Exemple : sur un câble de KEVLAR dont le diamètre est de 10 mm, comprenant 16 fuseaux à pas de tressage long (supérieur à 300) on dépose 12 rubans dont la section est de 2 × 3 mm de polyuréthane, à l'aide de la grille de répartition 8. La température régulée des zones de la filière est de 180 °C pour la zone 10a, 220 °C pour la zone 10b et de 250 °C pour la zone 10c. La vitesse de défilement à l'intérieur de la filière est de 3 à 5 mètres par minute. On obtient à la sortie un câble de 15 mm de diamètre qui est enroulé sur un cabestan récepteur.

**Revendications**

1. Procédé de revêtement de câbles ou cordages textiles comprenant une âme centrale (1), par une résine (7) thermoplastique ou thermodurcissable, caractérisé en ce qu'il consiste :
à dérouler l'âme (1) avec une prétension à travers une zone de préchauffage (4) ;
à déposer en continu, au moyen d'une grille de répartition (8), autour de l'âme (1) un ensemble de fils ou de bandes (7) de matière plastique extrudée ;
à faire passer l'ensemble composé de l'âme (1) et des bandes (7) dans une filière chauffée (10) dont la section est inférieure à la somme des sections de l'âme et de l'ensemble des bandes ;
à tirer l'ensemble composé de l'âme et du revêtement (27) à travers une zone de refroidissement au moyen d'un dispositif de traction (9) agissant sur le câble recouvert et refroidi (27) ;
à enrouler le câble obtenu sur un cabestan.

2. Procédé selon la revendication 1, caractérisé en ce que la tension, résultant de la traction, exercée sur le câble terminé par le dispositif de traction (9), est sensiblement égale à la tension moyenne d'utilisation.

3. Procédé selon l'une des revendications 1 ou 2, caractérisé en ce que le câble est constitué par une tresse sans fin enroulée sur deux cabestans, la filière (10) et la grille de répartition (8) pouvant s'ouvrir pour l'introduction de la tresse et l'extraction du produit.

4. Installation pour la mise en œuvre du procédé selon l'une quelconque des revendications précédentes comprenant une filière chauffante (10), une chenille de traction (9) et des moyens de refroidissement (11) disposés entre la filière (10) et la chenille (9), caractérisée en ce que pour le revêtement de câbles ou de cordages textiles comprenant une âme centrale, par une résine thermoplastique ou thermodurcissable elle comporte en outre un cabestan (2) sur lequel est enroulé un câble (1) à revêtir, des moyens (4) de chauffage du câble (1) disposés entre le cabestan (2) et la filière (10), un ratelier (6) portant des bobines (5) de matière thermoplastique (7) sous forme de fils ou rubans et des moyens (8) pour assembler les fils ou câbles (7) à la périphérie du câble (1) avant l'entrée de l'ensemble dans la filière.

**Claims**

1. Method for covering textile ropes or cables comprising a central core (1) with a thermoplastic or thermosetting resin (7), which method comprises :

winding off the core (1), with initial tension, through a preheating zone (4) ;

continuously depositing about the core (1) a group of threads or bands (7) of extruded plastic material, by means of a distribution grid (8),

passing the assembly comprising the core (1) and the bands (7) through a heated drawing die (10) the section of which is smaller than the sum of the sections of the core and the group of bands ;

drawing the assembly comprising the core and the coverin (27) through a cooling zone by means of a drawing device (9) acting on the cooled and covered cable (27) ;

winding the produced cable on a capstan.

2. Method according to claim 1, characterised in that the tension, resulting from the drawing action, produced in the cable ending at the drawing device (9) is substantially equal to the mean service tension.

3. Method according to one of claims 1 or 2, characterised in that the cable comprises an endless strand wound on two capstans, the drawing die (10) and the distribution grid (8) being adapted to open for the introduction of the strand and the removal of the product.

4. Installation for carrying out the method according to any one of the preceding claims, comprising a heating drawing die (10), a drawing-action endless track device (9) and cooling means (11) which are arranged between the drawing die (10) and the endless track device (9), characterised in that for covering textile ropes or cables, comprising a central core, with a thermoplastic or thermosetting resin the installation also comprises a capstan (2) on which a cable (1) to be covered is wound, means (4) for heating the cable (1) which are situated between the capstan (2) and the drawing die (10), a rack (6) supporting reels (5) of thermoplastic material (7) in the form of threads or bands, and means (8) for assembling the threads or bands (7) on the periphery of the cable (1) before the assembly enters the drawing die.

**Patentansprüche**

1. Verfahren zum Beschichten von textilen Seilen oder Schnüren, welche in der Mitte eine Seele (1) besitzen, mit einem thermoplastischen oder wärmehärtbarem Harz (7), gekennzeichnet durch folgende Schritte :

Abrollen der Seele (1) unter Vorspannung durch eine Vorheizzone (4) ;

Fortlaufendes Anlegen einer Einheit von Fäden oder Bändern (7) aus extrudiertem Plastikmaterial um die Seele (1) mittels einem Verteilungsgitter (8) :

Beförderung der aus der Seele (1) und den Bändern (7) bestehenden Einheit durch eine beheizte Düse (10), deren Durchmesser kleiner als die Summe der Durchmesser der Seele und der Einheit von Bändern ist ;

Durchziehen der aus der Seele und der Beschichtung (27) bestehenden Einheit durch eine Abkühlungszone mittels einer Zugvorrichtung (9), welche auf das beschichtete und abgekühlte (27) Seil einwirkt ;

Aufrollen des so erhaltenen Seiles auf eine Winde.

2. Verfahren nach Anspruch 1, dadurch gekennzeichnet, daß die aus der durch die Zugvorrichtung (9) auf das fertige Seil ausgeübten Zugbewegung resultierende Spannung etwa der mittleren Verwendungsspannung entspricht.

3. Verfahren nach einem der Ansprüche 1 oder 2, dadurch gekennzeichnet, daß das Seil aus einem endlosen, auf zwei Winden aufgerollten Geflecht besteht und daß die Düse (10) und das Verteilungsgitter (8) zum Einführen des Geflechts und zum Herausziehen des fertigen Produktes geöffnet werden können.

4. Vorrichtung zur Durchführung des Verfahrens nach einem der vorangegangenen Ansprüche, mit einer Heizdüse (10), einer Zugraupe (9) und Abkühleinrichtungen (11), welche zwischen der Düse (10) und der Raupe (9) angeordnet sind, dadurch gekennzeichnet, daß die Vorrichtung für die Beschichtung der textilen Seile oder Schnüre, welche in der Mitte eine Seele besitzen, mit einem thermoplastischen oder wärmehärtbaren Harz weiters eine Winde (2), auf die ein zu beschichtendes Seil (1) aufgewickelt ist, Einrichtungen (4) zum Beheizen des Seiles (1), welche zwischen der Winde (2) und der Düse (10) angeordnet sind, einen Rahmen (6), welcher Rollen (5) für thermoplastisches Material (7) in der Form von Fäden oder Bändern trägt, und Einrichtungen (8) zur Befestigung der Fäden oder Bänder (7) an die Oberfläche des Seiles (1) vor dessen Eintritt in die Düse aufweist.

FIG.1

0 108 016

FIG.2

FIG.3

FIG.4

FIG.5

FIG.6

0 108 016